# EUROPEAN PATENT SPECIFICATION

(11) **EP 3 412 580 B1**
(45) Date of publication and mention of the grant of the patent: **14.07.2021**
(21) Application number: 18173545.7
(22) Date of filing: 22.05.2018
(51) Int. Cl.: B64F 1/315

(54) **A MECHANISM FOR CHANGING THE HEIGHT OF PASSENGER STAIRS**
VORRICHTUNG ZUR VERÄNDERUNG DER HÖHE EINER PASSAGIERTREPPE
DISPOSITIF POUR VARIER L'HAUTEUR D'UN ESCALIER POUR PASSAGERS

(30) Priority: 24.05.2017 SI 201700145
(43) Date of publication of application: 12.12.2018
(73) Proprietor: Tips d.o.o., 8273 Leskovec pri Krskem (SI)
(72) Inventor: Sneberger, Silvo, 8250 Brezice (SI); Pustavrh, Robert, 8273 Leskovec pri Krskem (SI); Smole, Marjan, 3257 Podsreda (SI)
(74) Representative: Flak, Antonija

(56) References cited:
- GB-A- 594 643
- GB-A- 1 500 564
- GB-A- 2 097 717
- PH-A- 26 173
- US-A- 3 910 264
- US-A- 4 768 617

## Description

### Field of the invention

In the field of workflows and transport, the present invention is classified as a mechanism for changing the height of aircraft passenger stairs.

### The technical problem

The applicant's existing system for changing the height of passenger stairs uses a hydraulic cylinder installed in the middle of a lifting frame, into which oil is fed with a manual hydraulic pump. There are two leading cylinders on the left and right side of the lifting frame, along which two piston rods travel. The piston rods are provided with cut-outs into which pegs enter, allowing them to lock the height of the staircase. When the desired height of the staircase is set, the pegs carry the larger part of the load. They function automatically when lifting. Each peg is constantly being impacted by the spring force, pushing it into the cut-outs, and the shape of the peg enables it to automatically retreat from the piston rod during lifting. When lowering, the platform must first be slightly raised so that the hydraulic cylinder takes over the load, and then the pegs must be removed by pulling the lever in order to overcome the force of both springs and pull out both pegs. The platform and staircase are lowered with speed allowed by an adjustable damper on hydraulic piping.

Hydraulic drive components are generally less efficient, and the flexible hydraulic pipe, which is needed for a link between the hand pump on the undercarriage and the hydraulic cylinder on the movable frame, is less reliable compared with fixed pipes.

The system for changing the height of passenger stairs carries large loads even when the stairs are empty. Because the load of the entire platform and the major part of the staircase is being directly lifted, and the force used by the operator to drive the hand pump is limited, the effect of one manual pump stroke is small. To lift the passenger stairs from minimum to maximum height to tender the aircraft, it is necessary to use the hand pump for up to 4 minutes and invest quite some effort. When lifting and lowering the stairs, the operator has to carry out several different operations and be attentive to several factors.

Platform height is adjusted with passenger stairs carrying no load, whereby the number and the position of cut-outs for pegs determine a limited choice of predefined heights. With the desired height of the staircase set, the pegs carry the entire load of the platform and the staircase as well as of the passengers standing at the passage. Because the staircase height is only adjusted by one hydraulic cylinder, it is difficult to ensure a completely parallel lift while changing the height, as it depends on the load distribution of the platform. With an uneven load, the platform moves to the left or to the right, causing the leading piston rods to lift unevenly. Consequently, this leads to unequal height of cut-outs for pegs, which causes only one side to settle and peg properly, or the pegs are settled or pegged at different heights. The use of stairs set in such a way causes deformations of frameworks, which make it harder to lock the height of platform support already at this point, and eventually only get worse. Stairs with deformed framework are thus not suitable for further use.

On some versions, the hand pump is replaced by an electric hydraulic pump, and the manual offset mechanism is replaced by a hydraulic peg offset. On these versions, the burden on the operator when operating the height of the steps is reduced. Despite the upgrade, the operator is still carrying out several different operations and must be attentive to several factors, and the upgrade does not solve any other described problem.

### State of the art

Patent application WO 82/02031 by a Norwegian company NORGAS AS describes a solution for height-adjusted stairs with a lifting platform for physically disabled persons.

The patent application describes components for changing the height of stairs only as a part of a drive assembly and lifting cylinder, which can be hydraulic, mechanical or electric and are not defined in detail.

Patent application DE 42 43 998 A1 describes a tilt-adjustment mechanism for walking surfaces of passenger stairs while maintaining their parallel position. A linear actuator is foreseen for changing the height of stairs in the patent application. It is mentioned that instead of the hydraulic cylinder any lifting system can be used which maintains a tilt function of the four-joint mechanism described in the patent. The system is not defined in detail.

Patent application WO2012118386 describes a two-piece staircase with vertically adjustable height, which is preferentially lifted by a hydraulic linear actuator.

Patent applications GB1360831 and US6808057 describe passenger escalators, whose tilt can be changed with a hydraulic cylinder.

Patent application US3910264 discloses mobile steps of the multi-flight, constant pitch type for allowing passengers access to the doors of aircraft. Two rigid flights of steps are provided, a lower flight fixed to the chassis of a vehicle and leading to a landing connecting the lower flight to an upper retractable flight having a platform. The platform is raised and lowered to suit the height of the aircraft door above ground level by ram-operated telescopic tubes, thereby vertically moving the retractable flight of steps without moving the platform horizontally and without altering the pitch and inclination of the steps in use. This change is achieved in a manner differing from the present invention.

Patent application PH26173 relates to a passenger staircase having two interconnected threaded spindles and cylinders, but designed to operate in a different manner due to different connections with other parts of the mechanism.

Patent application US4768617 describes an adjustable stairway supported on a retractable, wheel mounted carriage. It has a locking mechanism that selectively maintains the carriage in a lowered, ground engaging position. The weight of the stairway urges the carriage into a raised position when the locking mechanism is released, allowing the stairway to rest on stationary foot pads. Movement into the raised position is executed differently than in the present invention.

Patent application GB1500564 discloses a motor vehicle elevator comprising a vehicle supporting framework vertically movably supported between a pair of support columns, the framework including vehicle support arms and synchronized and nut drive units associated with the support columns for vertically displacing the framework relative to the columns. Each column is mounted on a base-plate and is U-shaped in horizontal section, the operating screw being set between the column flanges where the associated nut is secured. Each screw is rotatably mounted in an associated vertical beam of the vehicle supporting framework and the top of each screw incorporates a chain drive wheel engageable by an endless drive chain driven by a motor mounted on the horizontal beam coupled between the upper ends of the vertical beams. The vehicle supporting framework is vertically movable with synchronized hydraulic piston and cylinder units, or chains on cables.

Patent application GB594643 describes a stand, for use in servicing aeroplanes, having a platform adapted to be lowered and raised relative to a rectangular base frame by means of two pairs of members, each member having one end pivotally connected to the platform and the other end pivoted to the base, and a hydraulic piston and cylinder assembly pivoted, at one end, to a cross member on the base and, at the other end, to a cross member, the point of attachment of the assembly to the base and of the members to the base being adjacent each other, whereby the distance through which the platform is moved is greater than the corresponding relative displacement between the piston and the cylinder. Steps are provided by U-shaped bars pivoted to the members and treads welded to the bars. The steps remain horizontal in any position of the platform owing to the pivotal connections. The hydraulic system comprises the member, serving as a reservoir, a force pump, actuated by a lever, a one-way valve and a hand-operated valve. In operation, to raise the platform, the valve is closed and the pump operated, this draws fluid from the reservoir through the tubes and forces itthrough the valve to the cylinder. To lower the platform the valve is opened and the fluid is expelled from the cylinder by the weight of the apparatus acting on the piston. To prevent accidental lowering of the platform a pin is passed through one of several openings in the piston.

The overviewed patents for adjusting the height foresee linear actuators, which are usually hydraulic, but they do not pay further attention to this. The existing solutions, as well as the above-described known solution of the applicant, are based on one or two hydraulic cylinders, which do not allow for a completely parallel lift of the left and right side of escalator platform. With manual operation, more time and effort is required to adjust the height. Locking mechanisms are used to maintain the height of the staircase, limiting the selection of heights to predetermined height positions.

### Description of the invention

A mechanism for changing the height of passenger stairs, according to claim 1 is provided, with further embodiments being defined in the dependent claims. In summary, the mechanism for changing the height of passenger stairs is designed on parallel self-locking threaded spindles, which are interconnected and driven via continuous chains, ensuring their synchronous rotation. Nuts with piston rods, which are attached to the platform via eyes at the top, move along the spindles due to the rotation of spindles, enabling continuous height adjustment of stairs. Due to the self-locking system of the spindles, a separate lock is not required as the reached height is preserved regardless of the load. The mechanism includes a relief system, which is designed with hydraulic cylinders and hydraulic accumulators, and works on the platform with force which resists the force of gravity of the platform and staircase on the mechanism. As the threaded spindles are largely relieved, a smaller mechanical force is necessary to change the height of the stairs. Via the chain transmission, the mechanism can be driven manually or can be motor-driven.

The mechanism for changing the height of escalators under the invention will be described below in further detail based on an embodiment and figures, which depict:
- Figure 1: The mechanism integrated on passenger stairs
- Figure 2: The mechanism
- Figure 2a: The mechanism with marked sections
- Figure 3a: A lifting assembly 3 (section A-A)
- Figure 3b: A lifting assembly 3' (section A'-A')
- Figure 4: A relief system
- Figure 5: A manual drive mechanism (section B-B)
- Figure 6: An electric drive (section C-C)
- Figure 7: A chain transmission (section D-D)

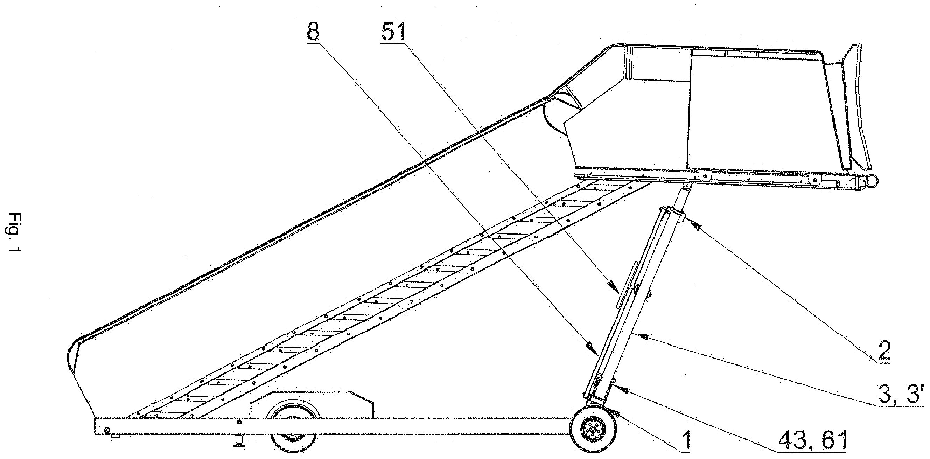

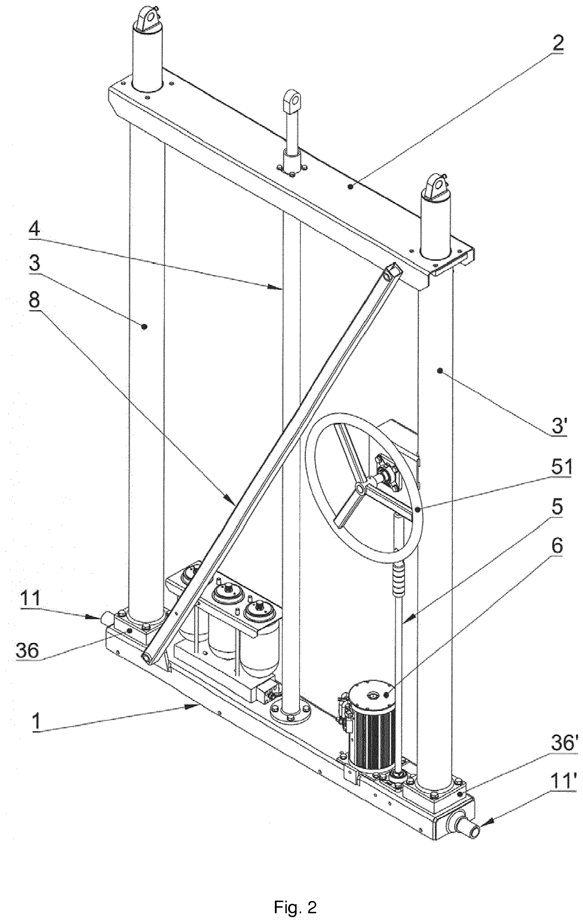

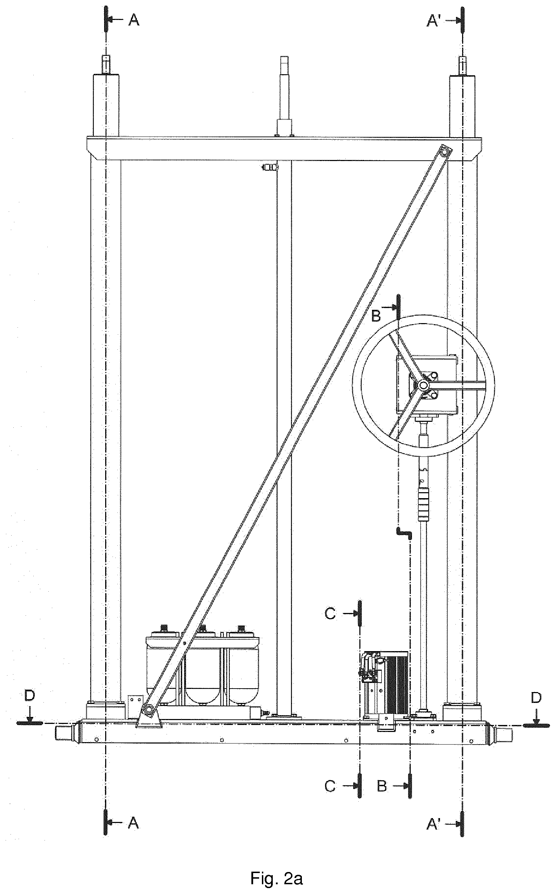

The mechanism for changing the height of passenger stairs according to the invention is designed as a supporting frame under the stairs (Figure 1), which is mounted on a chassis on the bottom side, and to an escalator platform on the upper side, and may change its length. The supporting frame sides are formed by lifting assembly 3 and lifting assembly 3' (Figure 2), the lower and the upper frame crosspiece are formed by connecting profiles 1 and 2, and the necessary rigidity of the frame is ensured by a diagonal 8. A hydraulic cylinder of a relief system 4 is centred on the frame. A system 7 of the chain drive is mounted in the bottom connecting profile 1, into which the chain wheel 55 of mechanism 5 of the manual drive and chain wheel 62 of motor drive 6 are connected. The mechanism is settled on the undercarriage via axes 11 and 11' on the connecting profile 1.

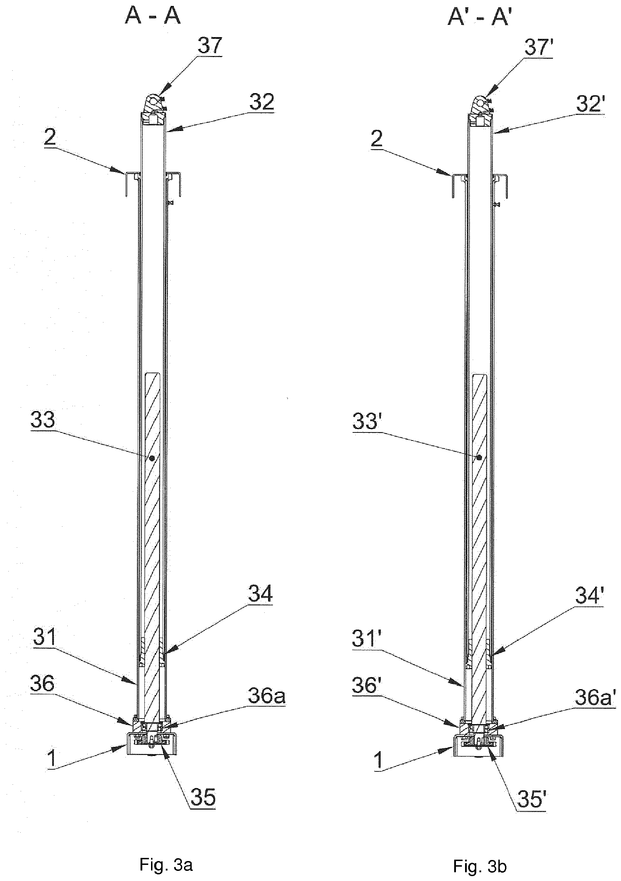

Between the lower connecting profile 1 and upper connecting profile 2 (Figures 3a and 3b), rollers 31 and 31' of lifting assemblies 3 and 3' are affixed on bearing cubes 36 and 36'. In cylinders 31 and 31', there are threaded spindles 33 and 33' mounted and settled with bearings 36a and 36a' in bearing cubes 36 and 36'. Torque of spindles is received via chain wheels 35 and 35', which are attached to the threaded spindles 33 and 33' within the lower connecting profile 1. Due to the rotation of self-locking threaded spindles 33 and 33', nuts 34 and 34' move along them, on which piston rods 32 and 32' are fixed. Piston rods 32 and 32' are also attached to the platform via eyes 37 and 37', which prevents rotation of nuts 34 and 34' together with spindles and ensures the movement of nuts with piston rods upwards or downwards depending on the direction of rotation of the self-locking threaded spindles.

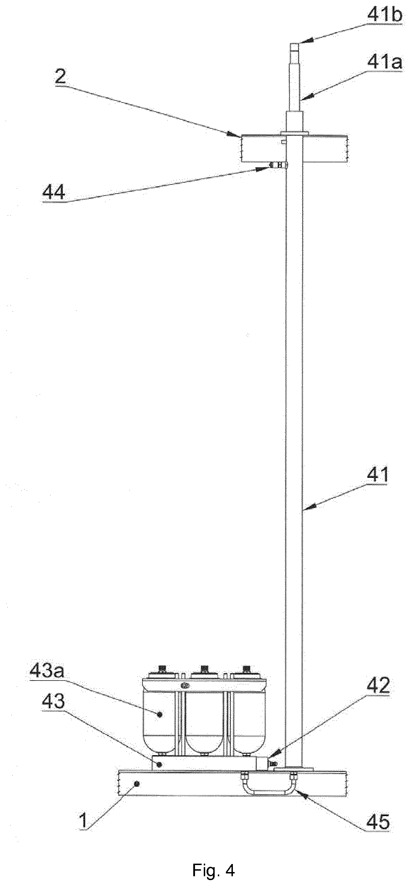

The relief system 4 (Figure 4) is provided between the lifting assembly 3 and lifting assembly 3', whose central part is the hydraulic cylinder 41. The latter is connected to the block 43 through a fixed hydraulic hose 45, on which three hydraulic accumulators 43a are mounted. There is at least one valve 42 on the block 43. Piston rod 41a of hydraulic cylinder 41 is fixed on the passenger stair platform through a fixing eye 41b. The pre-set pressure of gas and oil in the relief system 4 ensures such force that in the medium extended position of the frame the hydraulic cylinder 41 carries the entire force of gravity of the staircase and the platform of stairs carrying no load, which would normally be carried by threaded spindles 33 and 33'. In the middle position of stairs carrying no load, the threaded spindles are thus relieved, in lower positions they are subject to tensile load, and in higher positions to pressure load. The load of threaded spindles 33 and 33' is reduced, which consequently means that a smaller torque is needed to drive them and change the height of stairs. The upper part of the cylinder 41 displays a filling point 44 to fill the cylinder with oil.

The mechanism for changing the height of passenger stairs can be made so as to have one or more pairs of additional lifting assemblies between lifting assemblies 3 and 3'. These additional lifting assemblies are parallel to lifting assemblies 3 and 3'. Additional pairs of lifting assemblies have self-locking threaded spindles, whose chain wheels are connected with each other and with drive sprockets with at least one endless chain. The mechanism can be constructed in such a way that additional pairs of lifting assemblies have self-locking threaded spindles whose chain wheels are connected with each other with more endless chains, whereby at least chain wheels of the basic pair of lifting assembly with drive sprockets are connected with one endless chain transmitting torque between additional endless chains.

When servicing the system and disconnecting the platform from the lifting assembly in case of maintenance or replacement, the connection between hydraulic cylinder 41 and block 43 of hydraulic accumulators 43a can be interrupted with one or more valves 42, wherein the ball valves are preferred. This is necessary for the protection of personnel when servicing the system and disconnecting the platform from lifting assembly in case of maintenance or replacement.

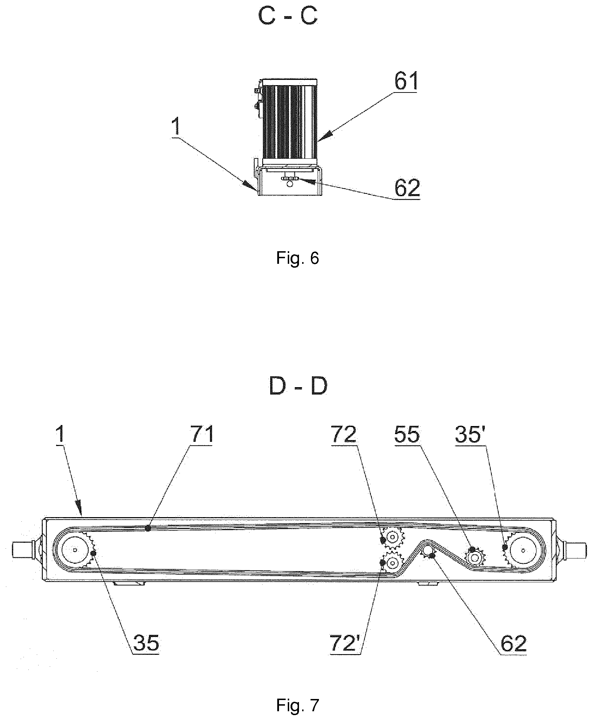

A motor drive 6 (Figure 6) is located on the mechanism, consisting of electric motor 61 and drive sprocket 62. By using the motor drive 6, the height of platform can be changed more quickly and the entire height range of stairs is reachable within 1 minute. The motor drive 6 is attached with grooves, which allows the chain wheel 62 to also perform the function of a tensioning chain wheel in the chain drive system 7.

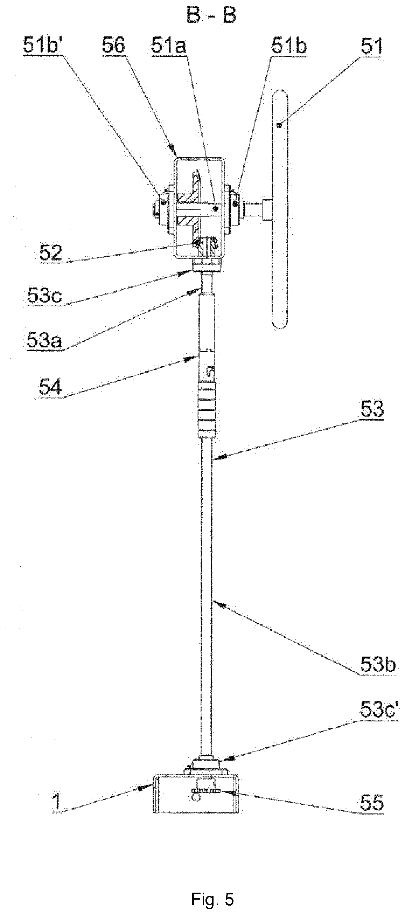

In case of emergency when the motor drive 6 does not work, the mechanism is equipped with manual drive mechanism 5 (Figure 5), which performs the function of an emergency system to lower the staircase, and consists of wheel 51, gear pair 52, upper shaft 53a, clutch 54, lower shaft 53b and chain wheel 55. Wheel 51 is mounted to the ergonomically appropriate height, due to which the operator can work in an upright position and is minimally burdened. The platform height can be set by turning the wheel 51, whose horizontal shaft 51a is settled with bearings 51b and 51b' on the housing 56, which is mounted to the lifting assembly 3'. A gear pair 52 is located within the housing 56, which transmits the torque of the wheel 51 on the upper shaft 53a. This is settled on the housing 56 with bearing 53c, and the lower shaft 53b is settled on a connecting profile 1 with bearing 53c'. The upper shaft 53a and the lower shaft 53b are connected by a clutch 54, which prevents rotation of the wheel 51 when the motor drive 6 is functioning, or the manual drive mechanism 5 is activated when the latter does not function. On the lower part of the shaft 53b, there is a chain wheel 55 mounted within the connecting profile 1, which is part of the chain drive system 7.

The chain drive system 7 is installed within the mounting rail 1 (Figure 7). Chain wheel 55 of manual drive mechanism 5, chain wheels 72 and 72' and drive sprocket 62 are mounted between chain wheels 35 and 35' of threaded spindles 33 and 33'. An endless chain 71 is mounted on chain wheels 35, 35', 55, 62, 72 and 72', which allows transmittal torque from the active drive to spindles. Chain wheels 72 and 72' maintain the right position of chain 71, rotate freely and are situated near the chain wheel 62, which performs the function of a tensioning chain wheel.

The torque of the wheel 51 of manual drive mechanism 5 is transmitted via the chain wheel 55 to the chain 71 of a system 7 and to chain wheels 35 and 35' of lifting assemblies 3 and 3', which rotates the threaded spindles 33 and 33' and consequently lifts or lowers nuts 34 and 34' of spindles, and with them piston rods 32 and 32' of leading pipes, as well as changes the height of the mechanism.

The torque of the drive motor 61 of motor drive 6 is transmitted via the chain wheel 62 to the chain 71 of the system 7 and to chain wheels 35 and 35' of lifting assemblies 3 and 3', which rotates the threaded spindles 33 and 33' and consequently lifts or lowers nuts 34 and 34' of spindles, and with them piston rods 32 and 32' of leading pipes, as well as changes the height of the mechanism.

Chain transmission of motion from active drive to chain wheels 35 and 35', which ensures uniform rotation of spindles, and threaded spindles 33 and 33', which have the same thread pitch, allow the nuts 34 and 34' and consequently piston rods 32 and 32' to lift and lower synchronously, ensuring perfectly parallel shifts of the left and right side of the platform. Due to the movement of the platform, the piston rod 41a of hydraulic cylinder 41 is also moving synchronously with piston rods 32 and 32', which due to the pressure of gas and oil in the relief system 4 is constantly impacting the platform with the opposite force to the force of gravity of the platform and the staircase on the mechanism. When the desired height is reached, the power supply to the active drive is stopped. During the passage of people, additional load is carried by threaded spindles 33 and 33', which maintain the set height due to a self-locking helix irrespective of load distribution on the platform and ensure the stability of the platform and the staircase with support in two points.

Except for the relief system, which dominated previous solutions, the hydraulic components were removed from the mechanism for changing the height of passenger stairs according to the invention. A completely mechanical lifting system is introduced, whose elements are highly reliable and have a higher efficiency, due to which the system experiences almost no downtime. Self-locking threaded spindles are essential, allowing the platform with their shape to move independently of the load distribution, and the chain transmission rotates them all the same and thus ensures synchronised shift of the left and right side of passenger stairs. Completely parallel shifts of the platform ensure the load of the construction to be within the limits and thus prevent bending and other damage to the frameworks, which could lead to the stairs being unsuitable for use. By using the self-locking spindles, there is no need for locking mechanisms which would restrict the choice of heights, and with a reliable height-locking system the stability of a desired position is ensured. The platform height is continuously adjustable and thus completely flexible to be used in given circumstances of use. The self-locking mechanism of threaded spindles also allows the system to stop when the drive stops, thereby providing greater security of the operator and other people present against possible hazards of compression, impact or other injuries.

Due to the relief system, the operator is not exposed to excessive effort when manually adjusting the height, and also the built-in engine can be smaller, thereby also reducing energy consumption during operation. The drive motor not only enables faster height adjustment of the platform and a complete disburdenment of the operator, but, due to the continuous height adjustment and self-locking properties of the system, also incorporation of advanced safety features, such as a safety bar and automatic tracking of aircraft height, on passenger stairs. During their use, the sensors on the platform detect changes in the height of aircraft. Data is received by the controller, which sends a command to the electric motor, if necessary, to adjust the height of the stairs.

Different versions of the mechanism for changing the height of passenger stairs may have, in addition to two basic assemblies, additional lifting assemblies with self-locking threaded spindles whose drive wheels are connected with each other and with drive sprockets by one or more endless chains.

The relief system can be composed of separate assemblies, each of which has its own hydraulic cylinders and hydraulic accumulators. An individual assembly of a relief system may have one or more hydraulic cylinders and one or more hydraulic accumulators, which are mounted on one or more freely distributed blocks. Hydraulic accumulators of an individual assembly are interconnected and operate together on all cylinders in the assembly. They are adapted to the number and dimensions of hydraulic cylinders in a particular assembly by number and properties.

Although the motor drive 6, regardless of the version but preferably electric, brings significant benefits to the mechanism for changing the height of passenger stairs, it also operates when the motor drive 6 is not built-in. In that case, the manual drive mechanism 5 is always used for lifting and lowering the stairs, where the shafts 53a and 53b and the clutch 54 are replaced by a uniform shaft 53. The drive wheel 62 does not function as a drive in this case, but it maintains the tensioning function. The manual drive mechanism 5 is installed next to the lifting assembly 3' (Figure 2) on the described implementation example, but it can be installed anywhere on the mechanism as long as it maintains the connection with the chain transmission system 7, enabling the transmission of torque on the spindles of lifting assemblies.

The diagonal 8, which is in the form of a rod in the described embodiment, can have any form as long as it provides the necessary rigidity to the mechanism. If necessary, there can be more such connections.

This mechanism allows parallel lifting and lowering of both sides of passenger stairs with continuous changing and locking of the height at any height and can be installed in all types of stairs for aircrafts.

## Claims

1. A mechanism for changing the height of passenger stairs, which allows mechanical movement, wherein the mechanism includes parallel self-locking threaded spindles (33 and 33'), which are interconnected via a chain drive system (7), and said spindles (33 and 33') are also driven via the chain drive system (7), allowing these spindles (33 and 33') to rotate synchronously, wherein spindle rotation nuts (34 and 34') with piston rods (32 and 32') move along the spindles, the rods (32 and 32') being fixable to a stair platform, allowing continuous height change of the passenger stairs and completely parallel movement of the passenger stair platform, wherein the mechanism further comprises a relief system, with a hydraulic cylinder (41) fixable to the platform and with hydraulic accumulators (43a), assembled together so that they, due to pre-set pressure of oil and gas, continuously exert force on the platform and thus relieve the threaded spindles (33 and 33') in order to achieve a smaller mechanical force necessary to rotate the spindles (33 and 33') and change the height of the stairs.

2. The mechanism for changing the height of passenger stairs according to claim 1, wherein it is designed as a supporting frame under a staircase, which is mountable on an undercarriage of the passenger stairs on a bottom part and on an upper part on the passenger stairs platform and can change its length; that sides of the supporting frame form lifting assemblies (3 and 3'), an upper and a lower frame crosspiece are formed by connecting profiles (1 and 2), and the necessary frame rigidity is ensured by a diagonal (8); that the chain drive system (7) is installed in the lower connecting profile (1); that the mechanism on the undercarriage is settled through an axis (11 and 11') on the connecting profile (1); that cylinders (31 in 31') of the lifting assemblies (3 and 3') are attached between the lower connecting profile (1) and the upper connecting profile (2) on a bearing cube (36 and 36'); that the threaded spindles (33 and 33') are installed in the cylinders (31 and 31') and settled with bearings (36a and 36a') in the bearing cubes (36 and 36'); that the spindles receive torque via chain wheels (35 and 35'), which are mounted on the threaded spindles (33 and 33') within the lower connecting profile (1); that due to the rotation of the self-locking threaded spindles (33 and 33'), the nuts (34 and 34') move along them, on which the piston rods (32 and 32') are fixed; that the piston rods (32 and 32') are also attachable to the passenger stairs platform through eyes (37 and 37'), which prevents rotation of the nuts (34 and 34') together with the spindles and ensures the movement of the nuts with the rods upwards or downwards depending on the direction of rotation of the self-locking threaded spindles.

3. The mechanism according to claim 2, wherein it may have one or more additional lifting assemblies between the lifting assemblies (3 and 3'); that the additional lifting assemblies are parallel to the lifting assemblies (3 and 3'); that chain wheels of additional lifting assemblies are included in the chain drive system (7).

4. The mechanism according to any of the claims from 2 to 3, wherein the diagonal (8) can have any form, preferably in the form of a rod, and that the mechanism may have one or more diagonals (8) to provide rigidity.

5. The mechanism according to any of the claims from 2 to 4, wherein the chain drive system (7) is installed within the lower connecting profile that forms a mounting rail (1); that a first chain wheel (55) of a manual drive mechanism (5), third chain wheels (72 and 72') and a drive chain wheel (62) are located between second chain wheels (35 and 35') of the threaded spindles (33 and 33'); that further chain wheels of additional lifting assemblies are located between the second chain wheels (35 and 35'); that one or more continuous chains (71) are linking chain wheels in the chain drive system (7), which provides the transmission of torque from active drive to spindles of lifting assemblies.

6. The mechanism according to any of claims 2-5, wherein the relief system (4) is provided between the two lifting assemblies (3, 3'), the central part being the hydraulic cylinder (41), which is connected to a block (43) through a fixed hydraulic hose (45), on which the hydraulic accumulators (43a) are mounted; that there is at least one valve (42) on the block (43); that a piston rod (41a) of the hydraulic cylinder (41) is fixable on the passenger stair platform through a fixing eye (41b); that the pre-set pressure of gas and oil in the relief system (4) ensures such force that in the medium extended position of the frame the hydraulic cylinder (41) carries the entire force of gravity of the staircase and the platform of stairs carrying no load, which would normally be carried by threaded spindles (33 and 33'); that the upper part of the cylinder (41) displays a filling point (44) to fill the cylinder with oil.

7. The mechanism according to any of the claims from 2 to 6, wherein when servicing the system and disconnecting the platform from the lifting assembly in case of maintenance or replacement, the connection between the hydraulic cylinder (41) and the block (43) of hydraulic accumulators (43a) can be interrupted with one or more valves (42), wherein the ball valves are preferred.

8. The mechanism according to any of the previous claims, wherein the relief system can be composed of separate assemblies, each of which has its own interconnected hydraulic cylinders and hydraulic accumulators.

9. The mechanism according to any of the previous claims, wherein it includes a motor and/or manual drive.

10. The mechanism according to claim 5, wherein a motor drive (6) consists of an electric motor (61) and the drive chain wheel (62), wherein the motor drive (6) is attached with grooves, which allows the drive chain wheel (62) to also perform the function of a tensioning chain wheel in the chain drive system (7).

11. The mechanism according to claim 10, wherein the torque of the electric motor (61) of the motor drive (6) is transmitted via the drive chain wheel (62) to the chain (71) of the chain drive system (7) and to the second chain wheels (35 and 35') of the lifting assemblies (3 and 3'), which rotates the threaded spindles (33 and 33') and consequently lifts or lowers the nuts (34 and 34') of the spindles, and with them the piston rods (32 and 32') of leading pipes, as well as changes the height of the mechanism.

12. The mechanism for changing the height of passenger stairs according to claim 10, wherein it is equipped with a manual drive mechanism (5), which performs the function of an emergency system to lower the staircase, and consists of a wheel (51), a gear pair (52), an upper shaft (53a), a clutch (54), a lower shaft (53b) and a chain wheel (55); that the platform height can be set by turning the wheel (51), whose horizontal shaft (51a) is settled with bearings (51b and 51b') on a housing (56), which is mounted to one lifting assembly (3'); that the gear pair (52) is located within the housing (56), which transmits the torque of the wheel (51) to the upper shaft (53a), which is settled on the housing (56) with bearing (53c), and the lower shaft (53b) is settled on the connecting profile (1) with a bearing (53c'); that the upper shaft (53a) and the lower shaft (53b) are connected by the clutch (54), which prevents the rotation of wheel (51) when the motor drive (6) is functioning, or the manual drive mechanism (5) is activated when the latter does not function; that on the lower part of the shaft (53b), a chain wheel (55) is mounted within the connecting profile (1), which is a part of the chain drive system (7).

13. The mechanism for changing the height of passenger stairs according to claim 14, wherein the torque of the wheel (51) of the manual drive mechanism (5) is transmitted via the chain wheel (55) to the chain (71) of the chain drive system (7) and to the second chain wheels (35 and 35') of the lifting assemblies (3 and 3'), which rotates the threaded spindles (33 and 33') and consequently lifts or lowers the nuts (34 and 34') of the spindles, and with them the piston rods (32 and 32'), as well as changes the height of the mechanism.

14. The mechanism for changing the height of passenger stairs according to claim 10, wherein the manual drive mechanism (5) is the only drive of the mechanism, whereby the shafts (53a and 53b) and the clutch (54) are replaced by a uniform shaft (53); that the chain wheel (62) is without motor drive (6) in the chain drive system (7) and performs the function of chain tensioning (71).

15. Passenger stairs with integrated mechanism for changing the height of passenger stairs according to any of the previous claims.

## Patentansprüche

1. Mechanismus zur Höhenverstellung von Passagiertreppen, der eine mechanische Bewegung ermöglicht, wobei der Mechanismus parallele selbstverriegelnde Gewindespindeln (33 und 33') umfasst, die über ein Kettenantriebssystem (7) miteinander verbunden sind, und die Spindeln (33 und 33'), die ebenfalls über das Kettenantriebssystem (7) angetrieben werden, so dass diese Spindeln (33 und 33') synchron rotieren können, wobei sich entlang der Spindeln Spindeldrehmuttern (34 und 34') mit Kolbenstangen (32 und 32') bewegen, die an einer Treppenplattform festlegbar sind, so dass eine kontinuierliche Höhenverstellung der Passagiertreppe und eine vollständige Parallelbewegung der Passagiertreppenplattform ermöglicht wird, wobei der Mechanismus ferner ein Entlastungssystem mit einem an der Plattform festlegbaren Hydraulikzylinder (41) sowie Hydrospeichern (43a) umfasst, die derart zusammengesetzt sind, dass sie aufgrund des voreingestellten Öl- und Gasdrucks kontinuierlich Kraft auf die Plattform ausüben und so die Gewindespindeln (33 und 33') entlasten, um eine kleinere mechanische, zum Drehen der Spindeln (33 und 33') notwendige, mechanische Kraft zu erreichen und die Treppenhöhe zu verstellen.

2. Mechanismus zur Höhenverstellung von Passagiertreppen nach Anspruch 1, wobei er als Tragrahmen unter einer Treppe ausgebildet ist, der an einem Fahrwerk der Passagiertreppe an einem Bodenteil und an einem Oberteil an der Passagiertreppenplattform montierbar ist und so ihre Länge verändern kann; dass Seiten des Tragrahmens Hubeinrichtungen (3 und 3') bilden, dass ein oberer und ein unterer Rahmensteg durch Verbindungsprofile (1 und 2) gebildet sind und die notwendige Rahmensteifigkeit durch eine Diagonale (8) gewährleistet ist; dass das Kettenantriebssystem (7) in das untere Verbindungsprofil (1) eingebaut ist; dass der Mechanismus am Fahrwerk durch eine Achse (11 und 11') auf dem Verbindungsprofil (1) gelagert ist; dass die Zylinder (31 und 31') der Hubeinrichtungen (3 und 3') zwischen dem unteren Verbindungsprofil (1) und dem oberen Verbindungsprofil (2) an einem Lagerwürfel (36 und 36') angebracht sind; dass in den Zylindern (31 und 31') Gewindespindeln eingebaut sind, die mit den Lagern (36a und 36a') in den Lagerwürfeln (36 und 36') gelagert sind; dass die Spindeln über Kettenräder (35 und 35') Drehmoment aufnehmen, die innerhalb des unteren Verbindungsprofils (1) auf den Gewindespindeln (33 und 33') montiert sind; dass sich durch die Drehung der selbsthemmenden Gewindespindeln (33 und 33') die Muttern (34 und 34') entlang dieser Gewindespindeln bewegen, an denen die Kolbenstangen (32 und 32') befestigt sind; dass die Kolbenstangen (32 und 32') auch durch Ösen (37 und 37') an der Passagiertreppenplattform anbringbar sind, die eine Rotation der Muttern (34 und 34') zusammen mit den Spindeln verhindert und die Bewegung der Muttern mit den Stangen in Abhängigkeit von der Drehrichtung der selbsthemmenden Gewindespindeln nach oben oder unten sicherstellt.

3. Mechanismus nach Anspruch 2, wobei er eine oder mehrere weitere Hubeinrichtungen zwischen den Hubeinrichtungen (3 und 3') aufweisen kann; dass die weiteren Hubeinrichtungen parallel zu den Hubeinrichtungen (3 und 3') sind; dass Kettenräder von weiteren Hubeinrichtungen im Kettenantriebssystem (7) enthalten sind.

4. Mechanismus nach einem der Ansprüche 2 bis 3, wobei die Diagonale (8) eine beliebige Form aufweisen kann, vorzugsweise die Form einer Stange, und dass der Mechanismus eine oder mehrere Diagonalen (8) aufweisen kann, um Steifigkeit sicherzustellen.

5. Mechanismus nach einem der Ansprüche 2 bis 4, wobei das Kettenantriebssystem (7) innerhalb des unteren Verbindungsprofils installiert ist, das eine Montageschiene (1) bildet; dass ein erstes Kettenrad (55) eines manuellen Antriebsmechanismus (5), dritte Kettenräder (72 und 72') und ein Antriebskettenrad (62) zwischen den zweiten Kettenrädern (35 und 35') der Gewindespindeln (33 und 33') angeordnet sind; dass zwischen den zweiten Kettenrädern (35 und 35') weitere Kettenräder weiterer Hubeinrichtungen angeordnet sind; dass eine oder mehrere Endlosketten (71) Kettenräder im Kettenantriebssystem (7) verbinden, das die Übertragung von Drehmoment vom aktiven Antrieb auf Spindeln von Hubeinrichtungen bereitstellt.

6. Mechanismus nach einem der Ansprüche 2 bis 5, wobei das Entlastungssystem (4) zwischen den beiden Hubeinrichtungen (3, 3') vorgesehen ist, wobei das Mittelteil der Hydraulikzylinder (41) ist, der über einen ortsfesten Hydraulikschlauch (45) mit einem Block (43) verbunden ist, an dem die Hydrospeicher (43a) gelagert sind; dass an dem Block (43) mindestens ein Ventil (42) vorgesehen ist; dass eine Kolbenstange (41a) des Hydraulikzylinders (41) durch ein Befestigungsauge (41b) an der Passagiertreppenplattform fixierbar ist; dass der voreingestellte Gas- und Öldruck im Entlastungssystem (4) eine solche Kraft gewährleistet, dass in der mittleren Strecklage des Rahmens der Hydraulikzylinder (41) die gesamte Schwerkraft der Treppe trägt und die lasttragende Plattform der Treppe keine Last trägt, die normalerweise von Gewindespindeln (33 und 33') getragen würde; dass der obere Teil des Zylinders (41) eine Einfüllstelle (44) zum Befüllen des Zylinders mit Öl aufweist.

7. Mechanismus nach einem der Ansprüche 2 bis 6, wobei die Verbindung zwischen dem Hydraulikzylinder (41) und dem Block (43) von Hydraulikspeichern (43a) bei Wartung des Systems und Trennen der Plattform von der Hubeinrichtung mit einem oder mehreren Ventilen (42) unterbrochen werden kann, wobei Kugelventile bevorzugt werden.

8. Mechanismus nach einem der vorhergehenden Ansprüche, wobei das Entlastungssystem aus separaten Einrichtungen zusammengesetzt sein kann, die jeweils eigene miteinander verbundene Hydraulikzylinder und Hydraulikspeicher aufweisen.

9. Mechanismus nach einem der vorhergehenden Ansprüche, wobei er einen Motor und/oder manuellen Antrieb umfasst.

10. Mechanismus nach Anspruch 5, wobei ein Motorantrieb (6) aus einem Elektromotor (61) und dem Antriebskettenrad (62) besteht, wobei der Motorantrieb (6) mit Nuten verbunden ist, die es dem Antriebskettenrad (62) ermöglichen, auch die Funktion eines Spannkettenrades im Kettenantriebssystem (7) durchzuführen.

11. Mechanismus nach Anspruch 10, wobei das Drehmoment des Elektromotors (61) des Motorantriebs (6) über das Antriebskettenrad (62) auf die Kette (71) des Kettenantriebssystems (7) und auf die zweiten Kettenräder (35 und 35') der Hubeinrichtungen (3 und 3') übertragen wird, die Gewindespindeln (33 und 33') dreht und damit die Muttern (34 und 34') der Spindeln anhebt oder absenkt, und mit ihnen die Kolbenstangen (32 und 32') der führenden Rohre sowie die Höhe des Mechanismus verstellt.

12. Mechanismus zur Höhenverstellung von Passagiertreppen nach Anspruch 10, wobei er mit einem manuellen Antriebsmechanismus (5) ausgestattet ist, der die Funktion eines Notfallsystems zum Absenken der Treppe ausführt und aus einem Rad (51), einem Zahnradpaar (52), einer oberen Welle (53a), einer Kupplung (54), einer unteren Welle (53b) und einem Kettenrad (55) besteht; dass die Plattformhöhe durch Drehen des Rades (51) einstellbar ist, deren horizontale Welle (51a) mit Lagern (51b und 51b') an einem Gehäuse (56) ausgeführt ist, das an einer Hubeinrichtung (3') angeordnet ist; dass das Zahnradpaar (52) innerhalb des Gehäuses (56) angeordnet ist, welches das Drehmoment des Rades (51) auf die obere Welle (53a) überträgt, die auf dem Gehäuse (56) mit Lager (53c) ausgeführt ist, und die untere Welle (53b) auf dem Verbindungsprofil (1) mit einem Lager (53c') gelagert ist; dass die obere Welle (53a) und die untere Welle (53b) durch die Kupplung (54) verbunden sind, die bei funktionierendem Motorantrieb (6) die Drehung des Rades (51) verhindert oder der manuelle Antriebsmechanismus (5) aktiviert wird, wenn dieser nicht funktioniert; dass am unteren Teil der Welle (53b) innerhalb des Verbindungsprofils (1) ein Kettenrad (55) gelagert ist, das Teil des Kettenantriebssystems (7) ist.

13. Mechanismus zur Höhenverstellung von Passagiertreppen nach Anspruch 14, wobei das Drehmoment des Rades (51) des manuellen Antriebsmechanismus (5) über das Kettenrad (55) auf die Kette (71) des Kettenantriebssystems (7) und auf die zweiten Kettenräder (35 und 35') der Hubeinrichtungen (3 und 3') übertragen wird, die Gewindespindeln (33 und 33') dreht und somit die Muttern (34 und 34') der Spindeln anhebt oder absenkt, sowie mit diesen die Kolbenstangen (32 und 32') und die Höhe des Mechanismus verändert.

14. Mechanismus zur Höhenverstellung von Passagiertreppen nach Anspruch 10, wobei der manuelle Antriebsmechanismus (5) der einzige Antrieb des Mechanismus ist, wobei die Wellen (53a und 53b) und die Kupplung (54) durch eine gleichförmige Welle (53) ersetzt sind; dass das Kettenrad (62) ohne Motorantrieb (6) im Kettenantriebssystem (7) ist und die Funktion der Kettenspannung (71) übernimmt.

15. Passagiertreppe mit integriertem Mechanismus zur Höhenverstellung von Passagiertreppen nach einem der vorhergehenden Ansprüche.

## Revendications

1. Mécanisme permettant de varier la hauteur d'un escalier pour passagers, qui permet un mouvement mécanique, le mécanisme comprenant des broches filetées autobloquantes parallèles (33 et 33'), qui sont interconnectées par l'intermédiaire d'un système d'entraînement à chaîne (7), et lesdites broches (33 et 33') sont également entraînées par l'intermédiaire du système d'entraînement à chaîne (7), permettant à ces broches (33 et 33') de tourner de manière synchrone, des écrous de rotation de broche (34 et 34') avec des tiges de piston (32 et 32') se déplaçant le long des broches, les tiges (32 et 32') pouvant être fixées à une plateforme d'escalier, permettant un changement de hauteur continu de l'escalier pour passagers et un mouvement complètement parallèle de la plateforme d'escalier pour passagers, le mécanisme comprenant en outre un système de décharge avec un vérin hydraulique (41) pouvant être fixé à la plateforme et avec des accumulateurs hydrauliques (43a), assemblés l'un à l'autre de telle sorte que, du fait de la pression prédéfinie d'huile et de gaz, ils exercent en continu une force sur la plateforme et soulagent ainsi les broches filetées (33 et 33') afin d'obtenir une force mécanique inférieure nécessaire pour faire tourner les broches (33 et 33') et varier la hauteur de l'escalier.

2. Mécanisme permettant de varier la hauteur d'un escalier pour passagers selon la revendication 1, lequel est conçu sous la forme d'un cadre de support sous un escalier, qui peut être monté sur un train de roulement d'escalier pour passagers sur une partie inférieure et sur une partie supérieure sur la plateforme d'escalier pour passagers et peut changer de longueur ; que les côtés du cadre de support forment des ensembles de levage (3 et 3'), une traverse de cadre supérieure et une traverse de cadre inférieure sont formées par des profils de liaison (1 et 2), et la rigidité nécessaire du cadre est assurée par une diagonale (8) ; que le système d'entraînement à chaîne (7) est installé dans le profil de raccord inférieur (1) ; que le mécanisme sur le train de roulement est installé à travers un axe (11 et 11') sur le profil de raccord (1) ; que les cylindres (31, 31') des ensembles de levage (3 et 3') sont fixés entre le profil de raccord inférieur (1) et le profil de raccord supérieur (2) sur un cube à paliers (36 et 36') ; que des broches filetées (33 et 33') sont installées dans les cylindres (31 et 31') et placées avec des paliers (36a et 36a') dans les cubes à paliers (36 et 36') ; que les broches reçoivent un couple par l'intermédiaire de roues dentées (35 et 35'), qui sont montées sur les broches filetées (33 et 33') à l'intérieur du profil de raccord inférieur (1) ; qu'en raison de la rotation des broches filetées autobloquantes (33 et 33'), les écrous (34 et 34') se déplacent le long de ceux-ci, sur lesquels les tiges de piston (32 et 32') sont fixées ; que les tiges de piston (32 et 32') peuvent également être fixées à la plateforme d'escalier pour passagers par l'intermédiaire des anneaux (37 et 37'), ce qui empêche la rotation des écrous (34 et 34') conjointement avec les broches et assure le mouvement des écrous avec les tiges vers le haut ou vers le bas en fonction de la direction de rotation des broches filetées autobloquantes.

3. Mécanisme selon la revendication 2, dans lequel il peut avoir un ou plusieurs ensembles de levage supplémentaires entre les ensembles de levage (3 et 3') ; que les ensembles de levage supplémentaires sont parallèles aux ensembles de levage (3 et 3') ; que des roues dentées d'ensembles de levage supplémentaires sont incluses dans le système d'entraînement à chaîne (7).

4. Mécanisme selon l'une quelconque des revendications 2 à 3, dans lequel la diagonale (8) peut avoir n'importe quelle forme, de préférence la forme d'une tige, et que le mécanisme peut avoir une ou plusieurs diagonales (8) pour fournir une rigidité.

5. Mécanisme selon l'une quelconque des revendications 2 à 4, dans lequel le système d'entraînement à chaîne (7) est installé à l'intérieur du profil de raccord inférieur qui forme un rail de montage (1) ; qu'une première roue dentée (55) d'un mécanisme d'entraînement manuel (5), des troisièmes roues dentées (72 et 72') et une roue dentée d'entraînement (62) sont situées entre des secondes roues dentées (35 et 35') des broches filetées (33 et 33') ; que d'autres roues dentées d'ensembles de levage supplémentaires sont situées entre les secondes roues dentées (35 et 35') ; qu'une ou plusieurs chaînes continues (71) relient les roues dentées dans le système d'entraînement à chaîne (7), qui assure la transmission du couple depuis l'entraînement actif jusqu'aux broches des ensembles de levage.

6. Mécanisme selon l'une quelconque des revendications 2 à 5, dans lequel le système de décharge (4) est disposé entre les deux ensembles de levage (3, 3'), la partie centrale étant le vérin hydraulique (41), qui est relié à un bloc (43) par l'intermédiaire d'un tuyau hydraulique fixé (45), sur lequel sont montés les accumulateurs hydrauliques (43a) ; qu'il y a au moins une soupape (42) sur le bloc (43) ; qu'une tige de piston (41a) du cylindre hydraulique (41) peut être fixée sur la plateforme d'escalier pour passagers par l'intermédiaire d'un anneau de fixation (41b) ; que la pression prédéfinie de gaz et d'huile dans le système de décharge (4) assure une force telle qu'en position étendue moyenne du cadre, le vérin hydraulique (41) porte toute la force de gravité de l'escalier et la plateforme d'escalier ne portant pas de charge, qui serait normalement portée par des broches filetées (33 et 33') ; que la partie supérieure du cylindre (41) est doté d'un point de remplissage (44) pour remplir le cylindre avec de l'huile.

7. Mécanisme selon l'une quelconque des revendications 2 à 6, dans lequel, lors de l'entretien du système et du décrochage de la plateforme de l'ensemble de levage en cas de maintenance ou de remplacement, la liaison entre le vérin hydraulique (41) et le bloc (43) d'accumulateurs hydrauliques (43a) peut être interrompue par une ou plusieurs vannes (42), les vannes à bille étant préférées.

8. Mécanisme selon l'une quelconque des revendications précédentes, dans lequel le système de décharge peut être composé d'ensembles séparés, dont chacun a ses propres vérins hydrauliques interconnectés et accumulateurs hydrauliques.

9. Mécanisme selon l'une quelconque des revendications précédentes, dans lequel il comprend un entraînement à moteur et/ou manuel.

10. Mécanisme selon la revendication 5, dans lequel un entraînement à moteur (6) est constitué d'un moteur électrique (61) et de la roue dentée d'entraînement (62), l'entraînement à moteur (6) étant fixé avec des rainures, ce qui permet à la roue dentée d'entraînement (62) d'assurer également la fonction de tendeur de chaîne dans le système d'entraînement à chaîne (7).

11. Mécanisme selon la revendication 10, dans lequel le couple du moteur électrique (61) de l'entraînement à moteur (6) est transmis par l'intermédiaire de la roue dentée d'entraînement (62) à la chaîne (71) du système d'entraînement à chaîne (7) et aux secondes roues dentées (35 et 35') des ensembles de levage (3 et 3'), qui fait tourner les broches filetées (33 et 33') et soulève ou abaisse par conséquent les écrous (34 et 34') des broches, et avec celles-ci, les tiges de piston (32 et 32') des tuyaux de guidage, ainsi que les changements de hauteur du mécanisme.

12. Mécanisme permettant de varier la hauteur d'un escalier pour passagers selon la revendication 10, dans lequel il est équipé d'un mécanisme d'entraînement manuel (5), qui assure la fonction d'un système d'urgence pour abaisser l'escalier, et est constitué d'une roue (51), d'une paire d'engrenages (52), d'un arbre supérieur (53a), d'un embrayage (54), d'un arbre inférieur (53b) et d'une roue de chaîne (55) ; que la hauteur de plateforme peut être réglée par rotation de la roue (51), dont l'arbre horizontal (51a) est réglé avec des paliers (51b et 51b') sur un boîtier (56), qui est monté sur un ensemble de levage (3') ; que la paire d'engrenages (52) est située à l'intérieur du boîtier (56), qui transmet le couple de la roue (51) à l'arbre supérieur (53a), qui est fixé sur le boîtier (56) avec un palier (53c), et l'arbre inférieur (53b) est fixé sur le profil de raccord (1) avec un palier (53c ') ; que l'arbre supérieur (53a) et l'arbre inférieur (53b) sont reliés par l'embrayage (54), ce qui empêche la rotation de la roue (51) lorsque l'entraînement à moteur (6) fonctionne, ou le mécanisme d'entraînement manuel (5) est activé lorsque ce dernier ne fonctionne pas ; que sur la partie inférieure de l'arbre (53b), une roue de chaîne (55) est montée à l'intérieur du profil de raccord (1), qui fait partie du système d'entraînement à chaîne (7).

13. Mécanisme permettant de varier la hauteur d'un escalier pour passagers selon la revendication 14, dans lequel le couple du moteur électrique (51) du mécanisme d'entraînement manuel (5) est transmis par l'intermédiaire de la roue dentée (55) à la chaîne (71) du système d'entraînement à chaîne (7) et aux secondes roues dentées (35 et 35') des ensembles de levage (3 et 3'), qui fait tourner les broches filetées (33 et 33') et soulève ou abaisse par conséquent les écrous (34 et 34') des broches, et avec celles-ci, les tiges de piston (32 et 32') des tuyaux de guidage, ainsi que les changements de la hauteur du mécanisme.

14. Mécanisme permettant de varier la hauteur d'un escalier pour passagers selon la revendication 10, dans lequel le mécanisme d'entraînement manuel (5) est le seul entraînement du mécanisme, moyennant quoi les arbres (53a et 53b) et l'embrayage (54) sont remplacés par un arbre uniforme (53) ; que la roue dentée (62) est dépourvue d'entraînement à moteur (6) dans le système d'entraînement à chaîne (7) et assure la fonction de tendeur de chaîne (71).

15. Escalier pour passagers à mécanisme intégré permettant de varier la hauteur de l'escalier pour passagers selon l'une quelconque des revendications précédentes.
